(19) Europäisches Patentamt
European Patent Office
Office européen des brevets

(11) Veröffentlichungsnummer: **0 207 269 B1**

# (12) EUROPÄISCHE PATENTSCHRIFT

(45) Veröffentlichungstag der Patentschrift: **15.07.92**

(51) Int. Cl.⁵: **C08G 77/52**, C08G 77/28, B01J 39/18

(21) Anmeldenummer: **86106591.0**

(22) Anmeldetag: **15.05.86**

## (54) Phenylsulfonatgruppen-haltige Organopolysiloxane, Verfahren zu ihrer Herstellung und Verwendung.

(30) Priorität: **25.05.85 DE 3518881**

(43) Veröffentlichungstag der Anmeldung: **07.01.87 Patentblatt 87/02**

(45) Bekanntmachung des Hinweises auf die Patenterteilung: **15.07.92 Patentblatt 92/29**

(84) Benannte Vertragsstaaten: **AT BE CH DE FR GB IT LI NL SE**

(56) Entgegenhaltungen:
**DE-A- 3 226 093**
**DE-B- 1 669 964**
**GB-A- 1 005 872**

(73) Patentinhaber: **Degussa Aktiengesellschaft**
**Weissfrauenstrasse 9**
**W-6000 Frankturt am Main 1(DE)**

(72) Erfinder: **Panster, Peter, Dr.**
**Im Lochseif 8**
**W-6458 Rodenbach(DE)**
Erfinder: **Kleinschmit, Peter, Dr.**
**Wildaustrasse 19**
**W-6450 Hanau(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Phenylensulfonatgruppen-haltige Organopolysiloxane, die in ihrer Eigenschaft als starksaure Kationenaustauscher gegenüber bekannten Kationenaustauschern auf Basis rein organischer Polymerer oder auf Basis anorganischer Trägersysteme verschiedene Vorteile besitzen. Weiterhin werden Verfahren zur Herstellung und Verwendung dieser neuen Produkte beschrieben.

Starksaure Kationenaustauscher, deren funktionelle Gruppen bekanntlich aus Sulfonsäureeinheiten bestehen, finden in der chemischen Synthese und Anwendungstechnik breiten Einsatz z. B. bei der Trennung von chemischen Verbindungen, der Abtrennung und Rückgewinnung von Metallionen aus Lösungen, als fester Säurekatalysator, als Träger von Wirkstoffen, bei der Reinigung und Entsalzung von Wasser und wäßrigen Lösungen oder bei der Trinkwasseraufbereitung. Die bisher fast ausschließlich verwendeten Typen bestehen aus einem organischen, gegebenenfalls mit Diethylenbenzol-Einheiten vernetzten Polystyrol-Grundgerüst, in dem die Phenyleneinheiten mit Sulfonatgruppen substituiert sind.

Diese marktgängigen Kationenaustauscher besitzen jedoch eine Reihe anwendungstechnischer Grenzen, die überwiegend auf ihre, durch die organische Natur des Polymergerüstes bedingten physikalischen und chemischen Eigenschaften zurückzuführen sind. Hierzu zählen die relativ niedrige Temperaturbeständigkeit von ca. 100 bis 150° C, eine teilweise große Empfindlichkeit gegenüber chemischen Angriffen und Bakterienbefall, die mit einem vollständigen Abbau der Matrix enden können, Löslichkeit in bestimmten Lösungsmitteln unter drastischeren Bedingungen, starke Quellbarkeit und Abhängigkeit des Austauschervolumens von der Art des Kations, teilweise Notwendigkeit der Quellung, um die funktionellen Gruppen zugänglich zu machen, woraus wiederum eine Nichteinsetzbarkeit in bestimmten organischen Lösungsmitteln resultiert.

Bei Verwendung einer anorganischen Matrix könnten sich diese Nachteile zu einem großen Teil vermeiden lassen, denn anorganische Polymere, wie z. B. Kieselsäuren oder Kieselgele, Aluminiumoxid, Titandioxid, Zirkondioxid usw. besitzen eine festliegende starre Struktur, Unquellbarkeit oder nur geringe Quellbarkeit, hohe Temperatur- und Alterungsbeständigkeit, Unlöslichkeit in organischen Lösungsmitteln, Wasser und Säuren sowie leichte Zugänglichkeit der vorhandenen funktionellen Gruppen, da diese meist an der Oberfläche sitzen. Unter diesen Aspekten erscheint es auch verständlich, daß starksaure Ionenaustauscher auf Basis anorganischer Materialien bereits synthetisiert worden sind, wie aus der europäischen Patentanmeldung 0 008 902 oder der britischen Patentschrift 1 506 226 ersichtlich ist.

Nachteilig wirkt sich in diesen Fällen allerdings aus, daß die Beladbarkeit anorganischer Materialien aufgrund der relativ geringen Anzahl funktioneller Gruppen nur sehr gering ist, denn entsprechende starksaure Kationenaustauscher besitzen in der $H^+$-Form eine maximale Kapazität von nur 0,5 - 0,6 meq $H^+$/g. Da die Verankerung der $SO_3H$-tragenden Gruppe auf der Trägeroberfläche aus sterischen Gründen im statistischen Mittel nur über eine hydrolyseempfindliche Si-0-Si-Einheit erfolgt, ist darüber hinaus stets die Gefahr ihrer Löslösung gegeben.

Der Stand der Technik auf dem Ionenaustauschersektor ist in Übersichtsform z. B. in Ullmanns Enzyklopädie der technischen Chemie, 4. Aufl., Bd. 13, S. 279 oder in Chemie-Ing.-Tech. 51, 7, 728 (1979) wiedergegeben.

In der deutschen Offenlegungsschrift 32 26 093 wurden über diesen Stand der Technik hinaus vor kurzem neue Kationenaustauscher mit einem Organopolysiloxan-Gerüst beschrieben, die die Vorzüge der vorstehend genannten Typen auf Basis anorganischer Träger ebenfalls aufweisen, jedoch nicht ihre Nachteile, denn ihre Kapazität ist um ein vielfaches höher und die Verankerung der $SO_3^-$-tragenden organischen Gruppen erfolgt über ein trivalent in die Matrix eingebautes Si-Atom und ist dementsprechend fester. Darüber hinaus kann die Stabilität der Matrix durch den Einbau sogenannter Vernetzer,auch in Gestalt von Heteroatomen, erhöht, die $SO_3^-$-Gruppendichte sowie spezifische Oberfläche und Porosität beeinflußt und evtl. die katalytischen Eigenschaften bei Verwendung als fester Säurekatalysator oder auch in teilweise oder vollständig metallausgetauschter Form als Metallkatalysator, in vorteilhafter Weise verändert werden.

Bei den letztgenannten Kationenaustauschern handelt es sich vom Typ her um Alkyl- oder Arylalkylsulfonat-Vertreter. Analoge Phenylsulfonatvertreter, die sich in der Säurestärke und in den physikalischen und chemischen Eigenschaften unterscheiden, sind dagegen noch nicht bekannt und ihre Bereitstellung war deshalb Ziel der hier beschriebenen Erfindung.

Die erfindungsgemäßen Phenylensulfonatgruppen-haltigen Organopolysiloxane sind im einzelnen dadurch gekennzeichnet, daß sie gleiche oder verschiedene Einheiten der allgemeinen Formel

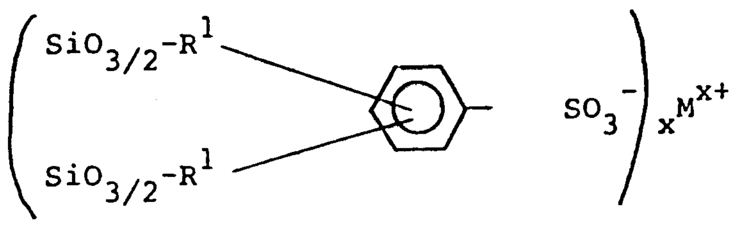

(1)

enthalten, in der die Brückenglieder $R^1$ für die Gruppen $-CH_2-CH_2-$ oder $CH_3-CH<$ stehen und gleich oder verschieden sein können,
x in Abhängigkeit von M eine Zahl von 1 bis 4 bedeutet und M für Wasserstoff oder ein 1 - 4 wertiges Metallion oder $NH_4$ steht und die freien Valenzen der Sauerstoffatome durch Siliciumatome weiterer Gruppen der Formel (1) und/oder durch vernetzende Brückenglieder
$SiO_{4/2}$ oder $R'SiO_{3/2}$ oder $R'_2\ SiO_{2/2}$,
$TiO_{4/2}$ oder $R'TiO_{3/2}$ oder $R'_2\ TiO_{2/2}$,
$ZrO_{4/2}$ oder $R'ZrO_{3/2}$ oder $R'_2\ ZrO_{2/2}$,
$AlO_{3/2}$ oder $R'AlO_{2/2}$
wobei R' eine Methyl- oder Ethylgruppe ist, und/oder durch unsulfonierte Phenyleneinheiten der allgemeinen Formel

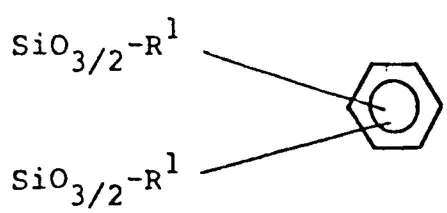

(2)

in der die Brückenglieder $R^1$ denselben Bedeutungsumfang wie bei Formel (1) haben und gleich oder verschieden sein können, abgesättigt sind und das Verhältnis der Summe der Si-Atome in Formel (1) und (2) zu den Brückenatomen Silicium, Titan, Zirkonium und Aluminium 1 : 0 bis 1 : 15 betragen kann.

Die Stellung der beiden $SiO_{3/2}$-$R^1$-Substituenten zueinander an der Phenylengruppe ist dabei von untergeordneter Bedeutung; es kann sowohl ortho-, als auch meta- oder para-Stellung gegeben sein. Analoges gilt auch für die Stellung der Sulfonatgruppe zu den beiden $SiO_{3/2}$-$R^1$-Substituenten. Auch in dieser Beziehung werden alle möglichen Isomeren umfaßt.

Das Verhältnis der Sulfonatgruppen-tragenden Einheiten nach Formel (1) zu den im Polymerverband gegebenenfalls vorhandenen Si-, Ti-, Zr- oder Al-haltigen Vernetzergruppen und den Phenylengruppen nach Formel (2) wird nach unten auch dadurch begrenzt, daß beim vorliegen der $H^+$-Grundform, d. h. wenn gemäß Formel (1) x = 1 und M = H, mindestens eine $H^+$-Kapazität von 0,1 meq/g Organopolysiloxan und eine Höchstkapazität dann gegeben ist, wenn keine Einheiten nach Formel (2) und keine vernetzenden Si-, Ti-, Zr- oder Al-haltigen Brückenglieder im Feststoff vorhanden sind. Diese Situation kann bei manchen Anwendungen der Phenylensulfonatgruppen-haltigen Organopolysiloxane prinzipiell gegeben sein. Im Hinblick auf die physikalischen Eigenschaften, wie z. B. die spezifische Oberfläche, die Temperaturbeständigkeit sowie die Beständigkeit der Matrix gegen An- oder Auflösung in wäßrigen Medien und hinsichtlich der raschen Zugänglichkeit aller vorhandenen Sulfonatgruppen ist es wünschenswert, wenn Si-, Ti-, Zr- oder Al-haltige Vernetzergruppen und/oder unsulfonierte Phenyleneinheiten nach Formel (2) im Polymerverband vorhanden sind.

Von den anwendungstechnischen Eigenschaften her geeignet sind demnach erfindungsgemäße Phenylensulfonatgruppenhaltige Organopolysiloxane mit einer Kapazität von mindestens 0,1 meq $H^+$/g Organopolysiloxan bis höchstens 3,16 meq $H^+$/g und besonders bevorzugt werden Vertreter mit einer Kapazität von mindestens 0,5 meq $H^+$/g bis 3,16 meq $H^+$/g Organopolysiloxan.

Bezüglich der Stabilität der neuen Phenylensulfonatgruppenhaltigen Organopolysiloxane gegenüber An- oder Auflösen bei erhöhter Temperatur in Wasser oder polaren organischen Solvenzien ist es von Vorteil, wenn das Produkt nach seiner Herstellung, gegebenenfalls in Verbindung mit einer Trocknung oder auch erst vor seiner Verwendung,einer Temperung in Gestalt einer 1-stündigen bis zu 5-tägigen Behandlung bei

einer Temperatur von 100° C bis maximal 350° C an der Luft, unter Schutzgasatmosphäre, bei Normaldruck, unter Vakuum oder Überdruck ausgesetzt wird. Die Maßnahme der Temperung ist z. B. auch von der Synthese von Kieselsäuren und Kieselgelen her bekannt. Sie bewirkt eine weitere Dehydratisierung bzw. eine Abspaltung von noch in der polymeren Substanz vorhandenen Alkoxigruppen bzw. Si-gebundenen Chloratomen in Gestalt des entsprechenden Alkohols bzw. von Chlorwasserstoffgas bei gleichzeitiger Ausbildung von Siloxanbindungen.

Gegenstand der Erfindung sind auch Verfahren zur Herstellung der neuen Phenylensulfonatgruppen-haltigen Organopolysiloxane. Nach dem wichtigsten Verfahren werden Organopolysiloxane, bestehend aus Einheiten der Formel

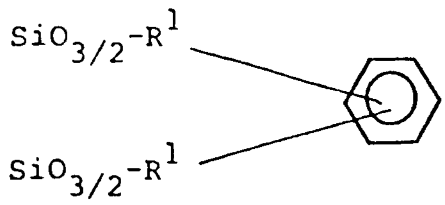

(2)

bei denen die Brückenglieder $R^1$ für die Gruppe $-CH_2-CH_2-$oder $CH_3-CH\langle$ stehen und gleich oder verschieden sein können, und die freien Valenzen der Sauerstoffatome durch Siliciumatome weiterer Gruppen der Formel (2) und/oder durch vernetzende Brückenglieder
$SiO_{4/2}$ oder $R'SiO_{3/2}$ oder $R'_2\ SiO_{2/2}$,
$TiO_{4/2}$ oder $R'TiO_{3/2}$ oder $R'_2\ TiO_{2/2}$,
$ZrO_{4/2}$ oder $R'ZrO_{3/2}$ oder $R'_2\ ZrO_{2/2}$,
$AlO_{3/2}$ oder $R'AlO_{2/2}$
wobei R' eine Methyl- oder Ethylgruppe ist, abgesättigt sind und das Verhältnis der Summe der Si-Atome in Formel (2) zu den Brückenatomen Silicium, Titan, Zirkonium und Aluminium 1 : 0 bis 1 : 15 betragen kann, mit stöchiometrischen, unterschüssigen oder überschüssigen Mengen eines geeigneten Sulfonierungsmittels, im letzten Fall bis zur 50-fachen der zur einmaligen Sulfonierung aller vorhandenen Phenylengruppen benötigten Menge, in flüssiger Phase bei Temperaturen von -78° C bis 250° C, vorzugsweise -50°C bis 150° C, insbesondere -20° C bis 150° C, während einiger Minuten bis mehrerer Tage, gegebenenfalls unter einem Druck, welcher der Summe der Partialdrucke der Reaktionskomponenten bei der Reaktionstemperatur entspricht, umgesetzt werden, worauf der Feststoff von der flüssigen Phase abgetrennt, extrahiert oder gewaschen, dann gegebenenfalls an der Luft, unter Vakuum oder Schutzgasatmosphäre bei Temperaturen von Raumtemperatur bis 150° C getrocknet und 1 Stunde bis 5 Tage, gegebenenfalls an der Luft, unter Vakuum oder Schutzgasatmosphäre bei Temperaturen von 100°C bis 350° C getempert werden, wobei Extraktion bzw. Wäsche und Trocknung gegebenenfalls wiederholt werden, und das Produkt schließlich bei bzw. nach Bedarf gemahlen und/oder klassifiziert wird, wobei eine oder mehrere der nach der Umsetzung vorgesehenen Maßnahmen unterbleiben oder in einer anderen Reihenfolge durchgeführt werden können.

Im Fall der gewünschten Herstellung eines möglichst feinteiligen Produkts kann eine Mahlung auch vor, während oder nach der Sulfonierung in Suspension oder auch nach Abtrennung von der flüssigen Phase in noch feuchtem Zustand durchgeführt werden.

Hinsichtlich der Sulfonierungsgeschwindigkeit des Organopolysiloxans nach Formel (2) zeigt sich erwartungsgemäß eine deutliche Abhängigkeit von der Teilchenfeinheit in der Weise, daß mit kleinerer Korngröße eine beschleunigte Sulfonierung feststellbar ist. Sulfonierungsmittel, mit denen im erfindungsgemäßen Verfahren eine Sulfonierung der Phenylengruppe erreicht werden kann, sind alle von der organischen Synthese her bekannten Sulfonierungsagenzien, wie z. B. konzentrierte Schwefelsäure, Lösungen von $SO_3$ in konzentrierter Schwefelsäure oder auch Chlorsulfonsäure. Besonders bevorzugt sind insbesondere aus technischen und ökonomischen Gründen konzentrierte Schwefelsäure oder Lösungen von $SO_3$ in Schwefelsäure, in denen das Polysiloxan nach Formel (2) direkt ohne weitere Hilfsmittel sulfoniert werden kann, während z. B. bei Einsatz von Chlorsulfonsäure wasserfreie Bedingungen gegeben sein müssen und die Verwendung eines zusätzlichen Lösungsmittels, üblicherweise eines chlorierten Kohlenwasserstoffes, wie z. B. Chloroform, angebracht ist.

Nach den beschriebenen Verfahren zur Herstellung der neuen Phenylensulfonatgruppen-haltigen Organopolysiloxane werden diese stets in der $H^+$-Form erhalten. Nach einem weiteren Herstellungsverfahren sind alle übrigen beanspruchten Austauscherformen zugänglich, die nicht direkt durch Sulfonierung erhalten werden.

Dieses Verfahren besteht darin, daß Phenylensulfonsäurehaltige Organopolysiloxane, bestehend aus Einheiten der Formel

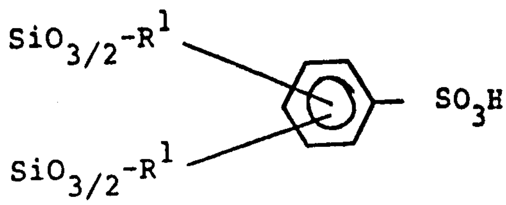

(3)

in der die Brückenglieder $R^1$ für die Gruppen $-CH_2-CH_2-$ oder $CH_3-CH<$ stehen und gleich oder verschieden sein können und die freien Valenzen der Sauerstoffatome durch Siliciumatome weiterer Gruppen der Formel (3) und/oder durch vernetzende Brückenglieder
$SiO_{4/2}$ oder $R'SiO_{3/2}$ oder $R'_2\ SiO_{2/2}$,
$TiO_{4/2}$ oder $R'TiO_{3/2}$ oder $R'_2\ TiO_{2/2}$,
$ZrO_{4/2}$ oder $R'ZrO_{3/2}$ oder $R'_2\ ZrO_{2/2}$,
$AlO_{3/2}$ oder $R'AlO_{2/2}$
wobei R' eine Methyl- oder Ethylgruppe ist, und/oder durch Phenyleneinheiten der allgemeinen Formel

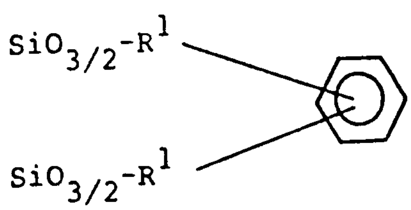

(2)

in der die Brückenglieder $R^1$ denselben Bedeutungsumfang wie bei Formel (3) haben und gleich oder verschieden sein können, abgesättigt sind und das Verhältnis der Summe der Si-Atome in Formel (3) und (2) zu den Brückenatomen Silicium, Titan, Zirkonium und Aluminium 1 : 0 bis 1 : 15 betragen kann, in ungetrockneter, getrockneter und/oder getemperter, gemahlener, ungemahlener und/oder klassifizierter Form mit einem anorganischen oder organischen Reagenz, welches in ein Kation oder Anion dissoziieren kann, zum gegenseitigen Austausch der Kationen nach dem statischen oder dynamischen Ionenaustauschprinzip umsetzt, anschliessend wäscht und dann gegebenenfalls den Feststoff von der flüssigen Phase abtrennt und gegebenenfalls trocknet sowie in beliebiger Reihenfolge mahlt und/oder klassifiziert und tempert.

Dieses Ionenaustauschverfahren beinhaltet auch einen Ionenaustausch in Gestalt einer Neutralisation, z. B. bei Umsetzung des Phenylensulfonsäure-haltigen Organopolysiloxans mit Alkalimetall- oder Erdalkalimetallhydroxiden oder mit Ammoniak, wie er bei bereits bekannten Ionenaustauscherharzen nach dem statischen oder dynamischen Prinzip vollzogen werden kann. Demnach kann man den Ionenaustausch in einer bewegten Suspension der Phenylensulfonsäure-haltigen Ausgangsverbindung mit dem zumindest teilweise gelösten dissoziationsfähigen Reagenz durchführen. Dabei wird das unlösliche Phenylensulfonsäure-haltige Material in wäßriger Suspension oder einem organischen Suspensionsmittel, bevorzugt polarer Natur mit dem zumindest teilweise gelösten dissoziationsfähigen Reagenz, mit dem der Austausch durchgeführt werden soll, in Kontakt gebracht. Anschließend wird der Feststoff abgetrennt und gegebenenfalls nochmals mit frischer Lösung des Reaktionspartners gerührt. Dieser Vorgang wird so oft wiederholt, bis der Ionenaustausch im gewünschten Umfang vollzogen ist. Anschließend kann der Feststoff nach gängigen Techniken, wie Filtrieren, Zentrifugieren und/oder Dekantieren abgetrennt, salzfrei gewaschen und bei Raumtemperatur oder erhöhter Temperatur bis 150° C, gegebenenfalls an der Luft, unter Schutzgasatmosphäre oder im Vakuum getrocknet, bei Temperaturen von 100°C bis 350° C getempert, gemahlen sowie klassifiziert werden.

Arbeitet man nach dem dynamischen Prinzip, so setzt man die Phenylensulfonsäuregruppen-haltige Ausgangsverbindung als Austauscherbett ein und bringt sie mit der Lösung des zumindest teilweise gelösten Reaktionspartners in Kontakt. Auch hier können wie bei den nach der statischen Methode erhaltenen Produkten Nachbehandlungen im erwähnten Umfang vorgesehen werden.

Im allgemeinen können die nach der Trocknung noch durchgeführten Behandlungsschritte auch in der Reihenfolge vertauscht sein oder können teilweise unterbleiben.

Verwendet man als Austauscherbett eine Austauschersäule, so muß, um einen ausreichenden Durchfluß zu gewährleisten, das polymere Ausgangsprodukt eine Mindestkorngröße besitzen, die auch in Abhängigkeit von der Säulendimension festzulegen ist. Im allgemeinen wird man bei Laborsäulen mit einer Mindestkorngröße von 0,2 mm auskommen. Die Maximalkorngröße wird andererseits dadurch begrenzt, daß innerhalb einer realistischen Verweilzeit noch eine ausreichende Austausch- bzw. Diffusionsgeschwindigkeit gegeben sein muß. Nach vollzogenem Austausch wird auch hier salzfrei gewaschen und es können dann entweder Nachbehandlungsmaßnahmen oder weitere Austauschmaßnahmen durchgeführt werden. Eine Mahlung der ausgetauschten Produkte kann natürlich nicht nur in trockenem Zustand, sondern auch naß durchgeführt werden.

Auf der Fähigkeit der erfindungsgemäßen Phenylensulfonatgruppen-haltigen Organopolysiloxane zum Kationenaustausch basiert die wichtigste Anwendung der offenbarten neuen Produkte, nämlich der Einsatz als universell nutzbarer Kationenaustauscher, der eine sehr temperatur- und lösungsmittelstabile Matrix besitzt und in wäßrigen und organischen Medien einsetzbar ist. Auch wegen der bestehenden Möglichkeit zu einer breiten Modifizierung der Matrix in der vorstehend beschriebenen Art ist eine bevorzugte Verwendung dieser Phenylensulfonatgruppen-haltigen Polysiloxane im Einsatz als Ionenaustauscher für Kationen zu sehen.

Gegenstand der Erfindung ist demzufolge auch die Verwendung der neuen Phenylensulfonatgruppen-haltigen Polysiloxane als Kationenaustauscher.

Charakterisieren lassen sich die neuen Produkte z. B. anhand von Elementaranalyse und Austausch-Ergebnissen. Ihre Zersetzungspunkte liegen je nach Zusammensetzung an der Luft bei über 200° C und unter Schutzgasatmosphäre bei über 300° C. Je nach Vorbehandlung, Art und Menge eines verwendeten Vernetzers besitzen sie spezifische Oberflächen von weniger als 1 $m^2/g$ bis zu 1000 $m^2/g$ und Teilchengrößendurchmesser von ca. 1 cm bis kleiner 1 µm. Ein Teilchengrößenbereich von 0,1 - 1,5 mm, wie er zu technischen Anwendungen als Ionenaustauscher gefordert wird, ist problemlos einstellbar.

Die Erfindung wird nachfolgend anhand von Ausführungsbeispielen zu den erfindungsgemäßen Herstellungsvarianten unter Berücksichtigung der grundsätzlich wichtigsten Ausgangsstoffe näher erläutert.

Beispiel 1

20 g eines Phenylengruppen-haltigen Organopolysiloxans, bestehend zu ca. 90 % aus Einheiten der Formel

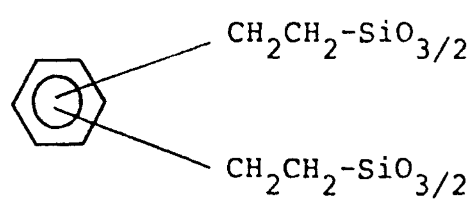

und zu ca. 10 % aus Einheiten der Formel

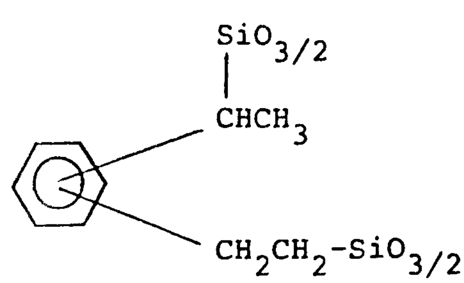

und

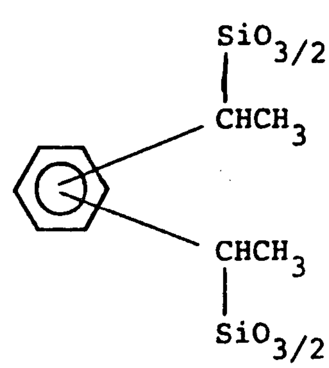

(gewichtsmäßige Mengenverteilung 2 : 1)
mit einer Korngröße von 0,2 - 0,4 mm, wurden bei Raumtemperatur unter Rühren in 100 ml konzentrierte Schwefelsäure eingetragen. Die Suspension wurde anschließend in einem 250 ml Dreihalskolben mit Rückflußkühler, KPG-Rührer und Innenthermometer auf 100° C erhitzt und 24 Stunden bei dieser Temperatur gerührt. Nach dieser Zeit wurde abgekühlt und die Reaktionssuspension unter Rühren in 500 ml Eiswasser eingetragen. Der Feststoff wurde abfiltriert, mit ca. 500 - 600 ml entsalztem Wasser neutral gewaschen und 24 Stunden bei 120° C/80 mbar getrocknet. Es konnten 25,5 g Produkt in Form eines braunen grobkörnigen Pulvers erhalten werden.

Bei einer vollständigen einmaligen Sulfonierung aller vorhandenen Phenylengruppen war ein theoretischer Schwefelwert von 10,13 % und eine Kapazität von 3,16 meq $H^+$/g zu erwarten. Gefunden werden konnten bei einer elementaranalytischen Untersuchung 9,30 % S. Eine direkte Titration der im Feststoff vorhandenen Sulfonsäuregruppen mit 0,1 n NaOH bis zum Erreichen eines pH-Wertes von 6,0 ergab eine $H^+$-Kapazität von 3,02 meq/g trockenem Produkt.

Beispiel 2

20 g des in Beispiel 1 verwendeten Ausgangsmaterials mit einer Korngröße von 0,2 - 0,4 mm wurden in 100 ml getrocknetem Methylenchlorid suspendiert. Zu dieser Suspension wurden bei Raumtemperatur innerhalb von 15 Min. unter kräftigem Rühren 8 ml Chlorsulfonsäure, verdünnt mit 30 ml Methylenchlorid, zugetropft. Bei zunächst kräftiger HCl-Entwicklung wurde die Mischung insgesamt 4 Stunden bei Raumtemperatur gerührt. Dann wurde der Feststoff abfiltriert, mit insgesamt 200 ml Methylenchlorid gewaschen und 6 Stunden bei 100° C getrocknet. Der getrocknete Feststoff wurde anschließend in 100 ml Wasser suspendiert und nach 1 Stunde wieder abfiltriert, nochmals mit 200 ml $H_2O$ gewaschen, dann 12 Stunden bei 120° C/100 mbar getrocknet und 20 Stunden bei 200° C und $N_2$-Atmosphäre getempert. Es konnten 24,2 g eines Sulfonsäuregruppen-haltigen Polysiloxans mit einer $H^+$-Kapazität von 2,34 meq/g, ermittelt durch direkte Titration mit 0,1 n NaOH, erhalten werden. Der analytisch bestimmte Schwefelgehalt des Feststoffs betrug 7,42 %.

Beispiel 3

25 g eines polymeren Produkts, bestehend zu ca. 90 % aus Einheiten der Formel

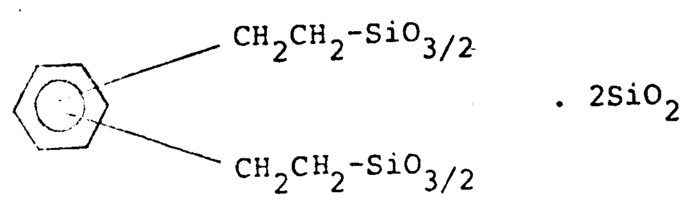

und zu ca. 10 % aus Einheiten der Formel

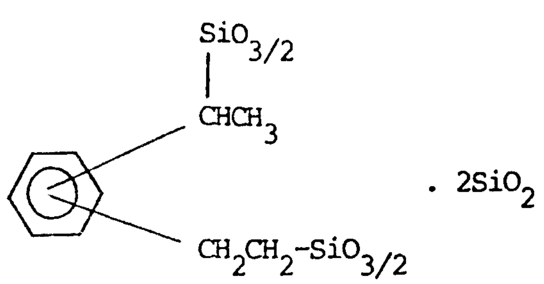

und

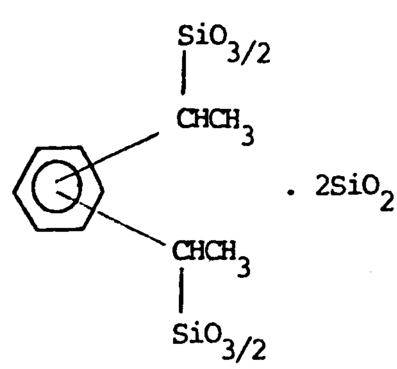

(gewichtsmäßige Mengenverteilung 2 : 1)

mit einem ortho/meta/para-Isomerenverhältnis von 12 Gew.%/65 Gew.%/23 Gew.% und mit einer Korngröße von 0,3 - 1,2 mm wurden in 120 ml konzentrierter Schwefelsäure suspendiert. Die Mischung wurde 15 Stunden bei 100° C gerührt, dann abgekühlt und in 500 ml Eiswasser eingerührt. Der Feststoff wurde abfiltriert, mit 300 ml entsalztem Wasser nachgewaschen und 8 Stunden bei 120° C getrocknet sowie 15 Stunden bei 200° C unter $N_2$-Atmosphäre getempert. Es konnten 27,8 g eines Sulfonsäuregruppen-haltigen Polysiloxans mit einer Kapazität von 2,25 meq $H^+$/g und einem S-Gehalt von 7,18 % erhalten werden. Bei einer vollständigen einmaligen Sulfonierung aller vorhandenen Phenylengruppen war eine Kapazität von 2,29 meq $H^+$/g und ein S-Wert von 7,34 % zu erwarten.

Beispiel 4

Aus 10 g des in Beispiel 1 verwendeten Ausgangsmaterials und 40 ml rauchender Schwefelsäure mit einem Gehalt von 30 Gew.% $SO_3$ wurden nach 6-stündiger Rührung bei Raumtemperatur und nach Aufarbeitung analog zu Beispiel 1 11,9 g eines Sulfonsäuregruppen-haltigen Polysiloxans mit einer Kapazität von 2,52 meq $H^+$/g und einem Schwefelgehalt von 7,80 % erhalten.

Beispiel 5

20 g eines Phenylengruppen-haltigen Organopolysiloxans, bestehend aus Einheiten der Formel

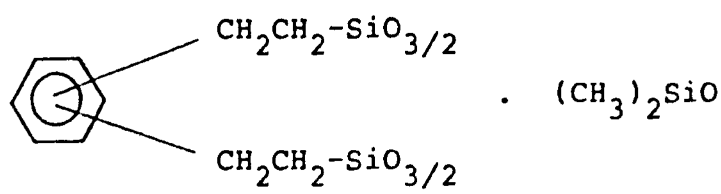

mit einem meta/para-Isomerenverhältnis von 60 Gew.%/40 Gew.% und einer Korngröße von 0,3 - 1,2 mm wurden 20 Stunden in 150 ml konzentrierter Schwefelsäure bei einer Temperatur von 100° C gerührt. Nach weiterer Aufarbeitung analog zu Beispiel 1 wurden 22,3 g eines mit $(CH_3)_2SiO$-Gruppen vernetzten Sulfonsäuregruppen-haltigen Polysiloxans mit einer Kapazität von 2,61 meq $H^+$/g und einem Schwefelgehalt von 8,25 % erhalten. Bei einmaliger Sulfonierung aller vorhandenen Phenylengruppen war eine theoretische Kapazität von 2,56 meq $H^+$/g und ein theoretischer Schwefelgehalt von 8,21 % zu erwarten.

Beispiel 6

Ausgehend von 15 g eines Phenylengruppen-haltigen Organopolysiloxans, bestehend aus Einheiten der Formel

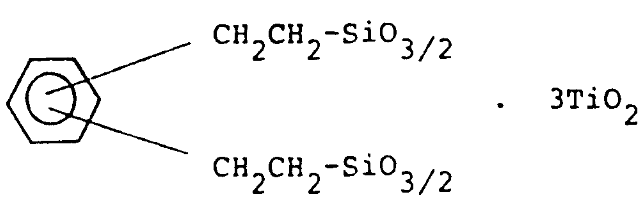

mit einem meta/para-Isomerenverhältnis von 60 Gew.%/40 Gew.% und einer Korngröße von 0,3 - 1,2 mm, und 80 ml konzentrierter Schwefelsäure wurden nach 24-stündigem Rühren bei 100° C und Aufarbeitung analog zu Beispiel 1 17,2 g eines $TiO_2$-vernetzten Sulfonsäuregruppen-haltigen Polysiloxans mit einer Kapazität von 1,78 meq $H^+$/g und einem Schwefelgehalt von 5,91 % erhalten.

Beispiel 7

Ausgehend von 20 g eines Phenylengruppen-haltigen Organopolysiloxans, bestehend aus Einheiten der Formel

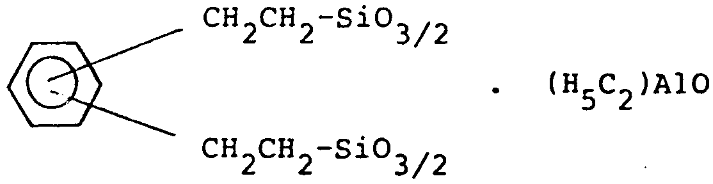

mit einem ortho/meta-Isomerenverhältnis von 60 Gew.%/40 Gew.% und einer Korngröße von 0,2 - 0,4 mm, und 100 ml konzentrierter Schwefelsäure wurden nach 24-stündigem Rühren bei 100° C und Aufarbeitung analog zu Beispiel 1 21,0 g eines $(H_5C_2)AlO$-vernetzten Sulfonsäuregruppen-haltigen Polysiloxans mit einer Kapazität von 1,97 meq $H^+$/g und einem Schwefelgehalt von 7,77 % erhalten.

Beispiel 8

Ausgehend von 10 g eines Phenylengruppen-haltigen Organopolysiloxans, bestehend aus Einheiten der Formel

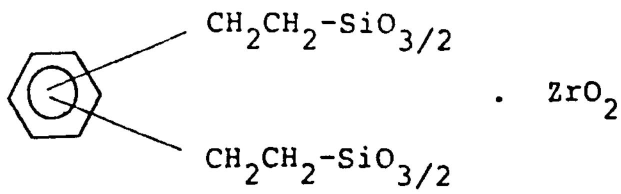

mit einem ortho/meta-Isomerenverhältnis von 60 Gew.%/40 Gew.% und einer Korngröße von 0,2 - 0,4 mm, und 50 ml konzentrierter Schwefelsäure wurden nach 24-stündigem Rühren bei 100° C und Aufarbeitung analog zu Beispiel 1 11,5 g eines $ZrO_2$-vernetzten Sulfonsäuregruppen-haltigen Polysiloxans mit einer Kapazität von 2,24 meq $H^+$/g und einem Schwefelgehalt von 7,30 % erhalten.

Beispiel 9

5 g des in Beispiel 1 hergestellten Sulfonsäuregruppenhaltigen Organopolysiloxans mit einer Kapazität von 3,02 meq $H^+$/g und einer Korngröße von 0,2 - 0,4 mm wurden 1 Stunde in 200 ml 0,1 n NaOH-Lösung gerührt. Anschließend wurde der Feststoff abfiltriert, mit 100 ml entsalztem Wasser gewaschen. Der Feststoff wurde dann mit 50 ml 0,5 n HCl-Lösung versetzt, 15 Min. gerührt und abfiltriert. Dieser Vorgang wurde noch 2 mal wiederholt, dann wurde der Feststoff mit 100 ml Wasser säurefrei gewaschen und 6 Stunden bei 120° C/100 mbar getrocknet. Die 3 verbliebenen Säurelösungen und das Waschwasser wurden vereinigt und eine Bestimmung des Natriumgehaltes durchgeführt. Danach waren bei der 3-stufigen Säurebehandlung insgesamt 309 mg $Na^+$ freigesetzt worden, was einem Austauschgrad von 89 % entspricht. Eine erneute Titration des getrockneten Feststoffs ergab eine $H^+$-Kapazität von 2,75 meq/g, d. h. ca. 91 % des ursprünglichen Wertes.

Beispiel 10

5 g des in Beispiel 2 hergestellten Sulfonsäuregruppenhaltigen Organopolysiloxans mit einer Kapazität von 2,34 meq $H^+$/g und einer Korngröße von 0,2 - 0,4 mm wurden zu 50 ml einer $CuSO_4$-Lösung, mit einem Gehalt an 80 g $CuSO_4$/1, zugesetzt. Die Suspension wurde 15 Min. im Becherglas bei Raumtemperatur gerührt, dann wurde die Lösung abdekantiert und der im Becherglas verbliebene Feststoff nochmals mit 50 ml $CuSO_4$-Lösung versetzt. Es wurde nochmals 15 Min. bei 50° C gerührt, dann wurde abfiltriert, der Feststoff mit 100 ml $H_2O$ ausgewaschen und 8 Stunden bei 120° C/100 mbar getrocknet. Eine anschließend durchgeführte elementaranalytische Untersuchung des erhaltenen Produkts (5,3 g) ergab einen Kupfergehalt von 6,4 %. Bei einem vollständigen Austausch aller $H^+$-Ionen durch Kupferionen war ein Cu-Wert von 6,9 % zu erwarten.

Beispiel 11

5 g des in Beispiel 7 hergestellten Sulfonsäuregruppenhaltigen Organopolysiloxans mit einer Kapazität von 1,97 meq $H^+$/g und einer Korngröße von 0,2 - 0,4 mm wurden analog zu Beispiel 10 zweimal mit 50 ml einer $FeCl_3$-Lösung, mit einem Gehalt von 54 g $FeCl_3$ /1, behandelt. Die elementaranalytische Untersuchung des getrockneten Feststoffs (5,1 g) ergab einen Fe-Gehalt von 3,1 %. Bei einem vollständigen Austausch aller $H^+$-Ionen durch Eisenionen war ein Fe-Wert von 3,5 % zu erwarten.

Beispiel 12

10 g des in Beispiel 3 hergestellten vernetzten Sulfonsäuregruppen-haltigen Organopolysiloxans mit einer Kapazität von 2,25 meq $H^+$/g und einer Korngröße von 0,3 - 1,2 mm wurden zunächst in 100 ml entsalztes Wasser eingerührt. Nach 24-stündigem Stehen wurde der Feststoff in eine Glassäule mit Frittenboden und einem Innendurchmesser von 10 mm überführt.

Anschließend wurde die Säule in 5 Chargen innerhalb 1 Stunde mit 300 ml 0,1 n NaOH-Lösung beschickt und dann mit 100 ml Wasser ausgewaschen. Durch Rücktitration der verbliebenen NaOH-Menge wurde der $H^+$/$Na^+$-Austauschgrad zu 98 % bestimmt.

Der nun in der $Na^+$-Form vorliegende Ionenaustauscher wurde anschließend in 5 Chargen mit insgesamt 100 ml 1 n Salzsäure behandelt. In den gesammelten Eluaten wurde die Natriummenge zu 466 mg bestimmt, was bedeutete, daß mindestens 90 % der ursprünglichen Kapazität des Ionenaustauschers wieder in der $H^+$-Form vorlagen.

## Patentansprüche

**1.** Phenylensulfonatgruppen-haltige Organopolysiloxane, dadurch gekennzeichnet, daß sie gleiche oder verschiedene Einheiten der allgemeinen Formel

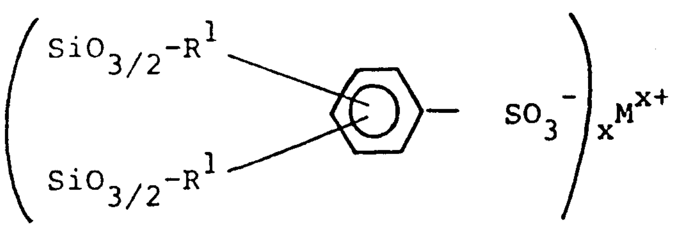

(1)

enthalten, in der die Brückenglieder $R^1$ für die Gruppen $-CH_2-CH_2-$ oder $CH_3-CH<$ stehen und gleich oder verschieden sein können,

x in Abhängigkeit von M eine Zahl von 1 bis 4 bedeutet und M für Wasserstoff oder ein 1 - 4 wertiges Metallion oder $NH_4$ steht und die freien Valenzen der Sauerstoffatome durch Siliciumatome weiterer Gruppen der Formel (1) und/oder durch vernetzende Brückenglieder

$SiO_{4/2}$ oder $R'SiO_{3/2}$ oder $R'_2\ SiO_{2/2}$,

$TiO_{4/2}$ oder $R'TiO_{3/2}$ oder $R'_2\ TiO_{2/2}$,

$ZrO_{4/2}$ oder $R'ZrO_{3/2}$ oder $R'_2\ ZrO_{2/2}$,

$AlO_{3/2}$ oder $R'AlO_{2/2}$

wobei R' eine Methyl- oder Ethylgruppe ist, und/oder durch unsulfonierte Phenyleneinheiten der allgemeinen Formel

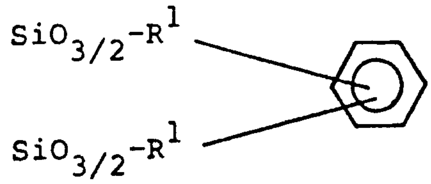 (2)

in der die Brückenglieder $R^1$ denselben Bedeutungsumfang wie bei Formel (1) haben und gleich oder verschieden sein können, abgesättigt sind und das Verhältnis der Summe der Si-Atome in Formel (1) und (2) zu den Brückenatomen Silicium, Titan, Zirkonium und Aluminium 1 : 0 bis 1 : 15 betragen kann.

**2.** Organopolysiloxane nach Anspruch 1, dadurch gekennzeichnet, daß, wenn $M^{x+} = H^+$ eine $H^+$-Kapazität von mindestens 0,1 meq/g Organopolysiloxan bis höchstens 3,16 meq/g Organopolysiloxan gegeben ist.

**3.** Organopolysiloxane gemäß Anspruch 1 oder 2 erhältlich durch 1-stüdiges bis 5-tägiges Temperv bei Temperaturen von 100° C bis 350° C an der Luft oder unter Schutzgasatmosphäre, bei Normaldruck, unter Vakuum oder Überdruck.

**4.** Verfahren zur Herstellung von Phenylensulfonatgruppenhaltigen Organopolysiloxanen gemäß Ansprüchen 1 bis 3, dadurch gekennzeichnet, daß Organopolysiloxane, bestehend aus Einheiten der Formel

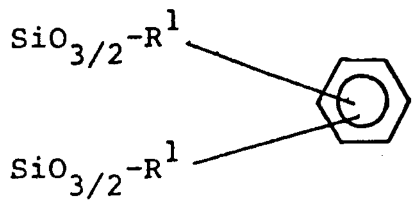 (2)

bei denen die Brückenglieder $R^1$ für $-CH_2-CH_2-$ oder $CH_3-CH<$ stehen und gleich oder verschieden sein können und die freien Valenzen der Sauerstoffatome durch Siliciumatome weiterer Gruppen der Formel (2) und/oder durch vernetzende Brückenglieder

$SiO_{4/2}$ oder $R'SiO_{3/2}$ oder $R'_2\ Sio_{2/2}$,

$TiO_{4/2}$ oder $R'TiO_{3/2}$ oder $R'_2\ TiO_{2/2}$,

$ZrO_{4/2}$ oder $R'ZrO_{3/2}$ oder $R'_2\ ZrO_{2/2}$,

$AlO_{3/2}$ oder $R'AlO_{2/2}$

wobei R' eine Methyl- oder Ethylgruppe ist, abgesättigt sind und das Verhältnis der Summe der Si-Atome in Formel (2) zu den Brückenatomen Silicium, Titan, Zirkonium und Aluminium 1 : 0 bis 1 : 15 betragen kann, mit stöchiometrischen, unterschüssigen oder überschüssigen Mengen eines Sulfonierungsmittels, bis zur 50-fachen der zur einmaligen Sulfonierung aller vorhandenen Phenylengruppen benötigten Menge, in flüssiger Phase bei Temperaturen von -78° C bis 250° C, vorzugsweise -50° C bis 150° C, insbesondere -20° C bis 150° C, während einiger Minuten bis mehrerer Tage, gegebenenfalls unter einem Druck, welcher der Summe der Partialdrucke der Reaktionskomponenten bei der Reaktionstemperatur entspricht, umgesetzt werden, worauf der Feststoff von der flüssigen Phase abgetrennt, extrahiert oder gewaschen, dann gegebenenfalls an der Luft, unter Vakuum oder Schutzgasatmosphäre bei Temperaturen von Raumtemperatur bis 150° C getrocknet und 1 Stunde bis 5 Tage, gegebenenfalls an der Luft, unter Vakuum oder Schutzgasatmosphäre bei Temperaturen von 100° C bis 350° C getempert wird, wobei Extraktion bzw. Wäsche und Trocknung gegebenenfalls wiederholt werden, und das Produkt schließlich bei Bedarf gemahlen und/oder klassifiziert wird.

5. Verfahren nach Anspruch 4, dadurch gekennzeichnet, daß die Sulfonierung der Organopolysiloxane bestehend aus Einheiten der Formel (2), mit konzentrierter Schwefelsäure, Lösungen von $SO_3$ in konzentrierter Schwefelsäure oder mit Chlorsulfonsäure durchgeführt wird.

6. Verfahren zur Herstellung von Phenylensulfonatgruppenhaltigen Organopolysiloxanen gemäß Ansprüchen 1 bis 3, dadurch gekennzeichnet, daß Phenylensulfonsäure-haltige Organopolysiloxane, bestehend aus Einheiten der Formel

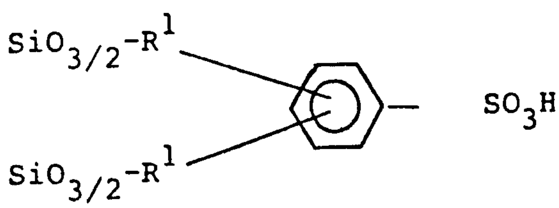 (3)

in der die Brückenglieder $R^1$ für die Gruppen $-CH_2-CH_2-$oder $CH_3-CH<$ stehen und gleich oder verschieden sein können und die freien Valenzen der Sauerstoffatome durch Siliciumatome weiterer Gruppen der Formel (3) und/oder durch vernetzende Brückenglieder

$SiO_{4/2}$ oder $R'SiO_{3/2}$ oder $R'_2\ SiO_{2/2}$,

$TiO_{4/2}$ oder $R'TiO_{3/2}$ oder $R'_2\ TiO_{2/2}$,

$ZrO_{4/2}$ oder $R'ZrO_{3/2}$ oder $R'_2\ ZrO_{2/2}$,

$AlO_{3/2}$ oder $R'AlO_{2/2}$

wobei R' eine Methyl- oder Ethylgruppe ist, und/oder durch Phenyleneinheiten der allgemeinen Formel

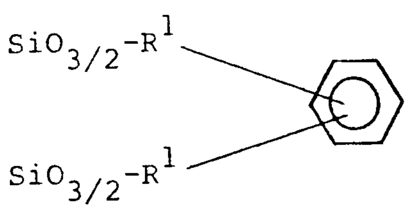 (2)

in der die Brückenglieder $R^1$ denselben Bedeutungsumfang wie bei Formel (3) haben und gleich oder verschieden sein können, abgesättigt sind und das Verhältnis der Summe der Si-Atome in Formel (3) und (2) zu den Brückenatomen Silicium, Titan, Zirkonium und Aluminium 1 : 0 bis 1 : 15 betragen kann, mit einem anorganischen oder organischen Reagenz, welches in ein Kation und ein Anion dissoziieren kann, zum gegenseitigen Austausch der Kationen nach dem statischen oder dynamischen Ionenaustauschprinzip umsetzt, anschließend wäscht und dann gegebenenfalls den Feststoff von der flüssigen Phase abtrennt und gegebenenfalls trocknet sowie in beliebiger Reihenfolge mahlt und/oder klassifiziert und tempert.

7. Verfahren nach Anspruch 6, dadurch gekennzeichnet, daß man den Ionenaustausch in einer bewegten Suspension der Ausgangsverbindung mit dem zumindest teilweise gelösten dissoziationsfähigen Reagenz durchführt oder die Ausgangsverbindung als Austauscherbett mit der Lösung des zumindest teilweise gelösten Reagenzes in Kontakt bringt.

8. Verwendung der Phenylensulfonatgruppen-haltigen Organopolysiloxane als starksaure Kationenaustauscher.

## Claims

**1.** Organopolysiloxanes containing phenylenesulfonate groups, **characterized in that** they contain like or different units corresponding to the following general formula

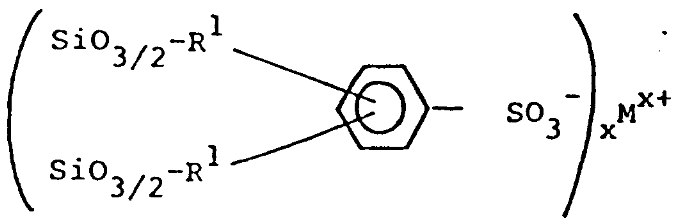

(1)

in which the bridge members $R^1$ represent the groups $-CH_2-CH_2-$ or $-CH_2-CH<$ and may be the same or different,
x as a function of M is a number of 1 to 4 and M is hydrogen or a 1- to 4-valent metal ion or $NH_4$ and the free valencies of the oxygen atoms are saturated by silicon atoms of other groups corresponding to formula (1) and/or by crosslinking bridge members

$SiO_{4/2}$ or $R'SiO_{3/2}$ or $R'_2\ SiO_{2/2}$,

$TiO_{4/2}$ or $R'TiO_{3/2}$ or $R'_2\ TiO_{2/2}$,

$ZrO_{4/2}$ or $R'ZrO_{3/2}$ or $R'_2\ ZrO_{2/2}$,

$AlO_{3/2}$ or $R'AlO_{2/2}$

where R' is a methyl or ethyl group,
and/or by unsulfonated phenylene units corresponding to the following general formula

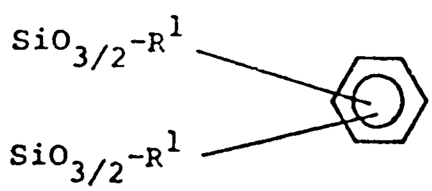

(2)

in which the bridge members $R^1$ have the same meanings as in formula (1) and may be the same or different,
and the ratio of the sum of the Si atoms in formulae (1) and (2) to the bridge atoms silicon, titanium, zirconium and aluminium can be from 1:0 to 1:15.

**2.** Organopolysiloxanes as claimed in claim 1, **characterized in that**, where $M^{x+} = H^+$, the $H^+$ capacity is at least 0.1 meq/g organopolysiloxane to at most 3.16 meq/g organopolysiloxane.

**3.** Organopolysiloxanes as claimed in claim 1 or 2 obtainable by heating for 1 hour to 5 days at temperatures of 100°C to 350°C in air or in an inert gas atmosphere and under normal pressure, vacuum or excess pressure.

**4.** A process for the production of the organopolysiloxanes containing phenylenesulfonate groups claimed in claims 1 to 3, characterized in that organopolysiloxanes consisting of units corresponding to the following formula

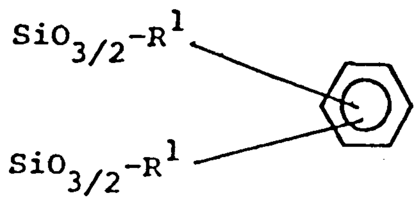

(2)

in which the bridge members $R^1$ represent $-CH_2-CH_2-$ or $-CH_2-CH<$ and may be the same or different and the free valencies of the oxygen atoms are saturated by silicone atoms of other groups corresponding to formula (2) and/or by crosslinking bridge members

$SiO_{4/2}$ or $R'SiO_{3/2}$ or $R'_2$ $SiO_{2/2}$,

$TiO_{4/2}$ or $R'TiO_{3/2}$ or $R'_2$ $TiO_{2/2}$,

$ZrO_{4/2}$ or $R'ZrO_{3/2}$ or $R'_2$ $ZrO_{2/2}$,

$AlO_{3/2}$ or $R'AlO_{2/2}$

where R' is a methyl or ethyl group,
and the ratio of the sum of the Si atoms in formula (2) to the bridge atoms silicon, titanium, zirconium and aluminium can be from 1:0 to 1:15,
are reacted with stoichiometric, less than stoichiometric or more than stoichiometric quantities of a sulfonating agent up to 50 times the quantity required for sulfonating all the phenylene groups present, the reaction being carried out for a few minutes to several days in the liquid phase at temperatures of -78°C to 250°C, preferably at temperatures of -50°C to 150°C and, more preferably, at temperatures of -20°C to 150°C and optionally under a pressure corresponding to the sum of the partial pressures of the reaction components at the reaction temperature, after which the solid is separated from the liquid phase, extracted or washed, optionally dried in air in a vacuum or in an inert gas atmosphere at temperatures from room temperature to 150°C and over periods of 1 hour to 5 days, optionally heated at temperatures of 100°C to 350°C in air, in a vacuum or in an inert gas atmosphere, extraction or washing and drying optionally being repeated, and finally the product is ground and/or graded as required.

5. A process as claimed in claim 4, **characterized in that** the sulfonation of the organopolysiloxanes consisting of units corresponding to formula (2) is carried out with concentrated sulfuric acid, solutions of $SO_3$ in concentrated sulfuric acid or with chlorosulfonic acid.

6. A process for the production of the organopolysiloxanes containing phenylenesulfonate groups claimed in claims 1 to 3, **characterized in that** organopolysiloxanes containing phenylenesulfonic acid and consisting of units corresponding to the following formula

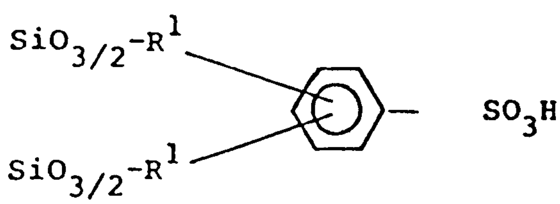

(3)

in which the bridge members $R^1$ represent the groups $-CH_2-CH_2-$ or $-CH_2-CH<$ and may be the same or different and the free valencies of the oxygen atoms are saturated by silicon atoms or other groups corresponding to formula (3) and/or by crosslinking bridge members

$SiO_{4/2}$ or $R'SiO_{3/2}$ or $R'_2$ $SiO_{2/2}$,

$TiO_{4/2}$ or $R'TiO_{3/2}$ or $R'_2\ TiO_{2/2}$,

$ZrO_{4/2}$ or $R'ZrO_{3/2}$ or $R'_2\ ZrO_{2/2}$,

$AlO_{3/2}$ or $R'AlO_{2/2}$

in which R' is a methyl or ethyl group,
and/or biphenylene units corresponding to the following general formula

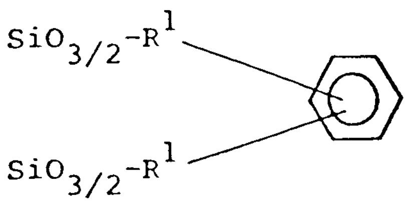

(2)

in which the bridge members $R^1$ have the same meanings as in formula (3) and may be the same or different,
and the ratio of the sum of the Si atoms in formula (3) and (2) to the bridge atoms silicon, titanium, zirconium and aluminium can be from 1:0 to 1:15,
are reacted with an inorganic or organic reagent capable of dissociating into a cation and an anion for mutual exchange of the cations on the static or dynamic ion exchange principle, subsequently washed and the solid is then optionally separated from the liquid phase and optionally dried and ground and/or graded and heated in any order.

7. A process as claimed in claim 6, **characterized in that** the ion exchange is carried out in a stirred suspension of the starting compound containing the at least partly dissolved dissociable reagent or the starting compound is contacted as an exchanger bed with the solution of the at least partly dissolved reagent.

8. The use of the organopolysiloxanes containing phenylenesulfonate groups as strongly acidic cation exchangers.

**Revendications**

1. Organopolysiloxanes contenant des groupes phénylènesulfonates, caractérisés en ce qu'ils contiennent des motifs, identiques ou différents, de formule générale

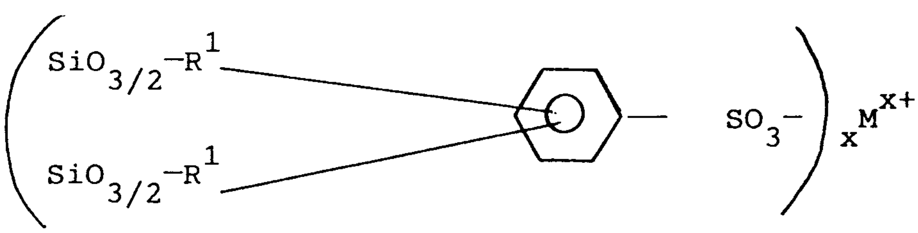

(1)

dans laquelle :
les chaînons pontants $R^1$ représentent les groupes $-CH_2-CH_2-$ ou $CH_3-CH<$ et peuvent être identiques ou différents,
x représente, en fonction de M, un nombre allant de 1 à 4, et M représente un atome d'hydrogène ou un ion métallique mono-- a tétravalent ou $NH_4$,
et les valences libres des atomes d'oxygène sont saturées par des atomes de silicium d'autres groupes de formule (1) et/ou par des chaînons pontants réticulants

$SiO_{4/2}$ ou $R'SiO_{3/2}$ ou $R'_2\ SiO_{2/2}$ /

$TiO_{4/2}$ ou $R'TiO_{3/2}$ ou $R'_2\ TiO_{2/2}$ /

$ZrO_{4/2}$ ou $R'ZrO_{3/2}$ ou $R'_2\ ZrO_{2/2}$ /

$AlO_{3/2}$ ou $R'AlO_{2/2}$

R' étant un groupe méthyle ou éthyle, et/ou par des motifs phénylène non sulfonés de formule générale

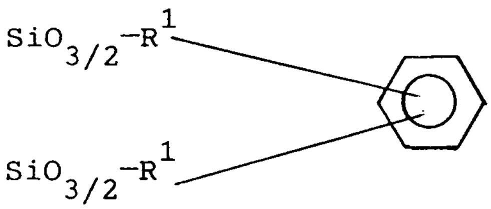

(2)

dans laquelle les chaînons pontants $R^1$ ont la même signification que dans la formule (1) et peuvent être identiques ou différents, et le rapport de la somme des atomes de Si dans la formule (1) et la formule (2) aux atomes pontants silicium, titane, zirconium et aluminium peut aller de 1 : 0 à 1 : 15.

**2.** Organopolysiloxanes selon la revendication 1, caractérisés en ce que, lorsque $M^{x+} = H^+$, une capacité de $H^+$ allant d'au moins 0,1 meq/g d'organopolysiloxane à au plus 3,16 meq/g d'organopolysiloxane est fournie.

**3.** Organopolysiloxanes selon la revendication 1 ou 2 pouvant être obtenus par un traitement thermique de 1 heure à 5 jours à des températures de 100 °C à 350 °C, à l'air ou sous atmosphère de gaz inerte, à la pression normale, sous vide ou sous une surpression.

**4.** Procédé pour la préparation d'organopolysiloxanes contenant des groupes phénylènesulfonates, selon l'une quelconque des revendications 1 à 3, caractérisé en ce que l'on fait réagir des organopolysiloxanes constitués de motifs de la formule

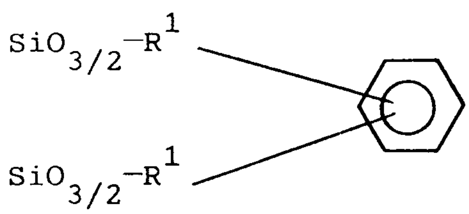

(2)

dans lesquelles les chaînons pontants $R^1$ représentent $-CH_2-CH_2-$ ou $CH_3-CH<$ et peuvent être identiques ou différents, et les valences libres des atomes d'oxygène sont saturées par des atomes de silicium d'autres groupes de formule (2) et/ou par des chaînons pontants réticulants

$SiO_{4/2}$ ou $R'SiO_{3/2}$ ou $R'_2\ SiO_{2/2}$ /
$TiO_{4/2}$ ou $R'TiO_{3/2}$ ou $R'_2\ TiO_{2/2}$ /
$ZrO_{4/2}$ ou $R'ZTO_{3/2}$ ou $R'_2\ ZrO_{2/2}$ /
$AlO_{3/2}$ ou $R'AlO_{2/2}$

dans laquelle R' étant un groupe méthyle ou éthyle et le rapport des sommes des atomes de Si dans la formule (2) aux atomes pontants silicium, titane, zirconium et aluminium pouvant aller de 1 :0 à 1 : 15, avec des quantités stoechiométriques, plus faibles ou en excès, d'un agent de sulfonation, jusqu'à 50 fois la quantité nécessaire pour la sulfonation en une fois de tous les groupes phénylène présents, en phase liquide à des températures de -78 à 250 °C, de préférence de -50 à 150 °C, en particulier de -20 à 150 °C, pendant quelques minutes à plusieurs jours, éventuellement sous une pression qui

correspond à la somme des pressions partielles des composants en réaction à la température de la réaction, à la suite de quoi on sépare la matière solide de la phase liquide, on l'extrait ou on la lave, éventuellement on la sèche ensuite à l'air, sous vide ou sous une atmosphère de gaz inerte, à des températures allant de la température ambiante à 150 °C, puis on l'étuve pendant 1 heure à 5 jours éventuellement à l'air, sous vide ou sous une atmosphère de gaz inerte, à des températures de 100 à 350 °C, en répétant éventuellement l'extraction ou le lavage et le séchage, et si nécessaire on broie enfin le produit et/ou on le classe par taille.

**5.** Procédé selon la revendication 4, caractérisé en ce que l'on effectue la sulfonation des organopolysiloxanes constitués de motifs de formule (2), avec de l'acide sulfurique concentré, des solutions de $SO_3$ dans de l'acide sulfurique concentré ou avec de l'acide chlorosulfonique.

**6.** Procédé pour la préparation d'organopolysiloxanes contenant des groupes phénylènesulfonates selon l'une quelconque des revendications 1 à 3, caractérisé en ce que l'on fait réagir des organopolyxilopxanes contenant de l'acide phénylènesulfonique, constitués de motifs de la formule

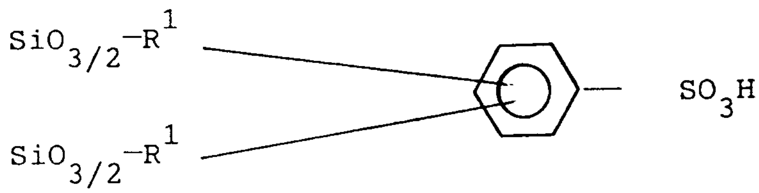 (3)

dans laquelle les chaînons pontants $R^1$ représentent les groupes $-CH_2-CH_2-$ ou $CH_3-CH<$ et peuvent être identiques ou différents et les valences libres des atomes d'oxygène sont saturés par des atomes de silicium d'autres groupes de formule (3) et/ou par des chaînons pontants réticulants

$SiO_{4/2}$ ou $R'SiO_{3/2}$ ou $R'_2\ SiO_{2/2}$ /
$TiO_{4/2}$ ou $R'TiO_{3/2}$ ou $R'_2\ TiO_{2/2}$ /
$ZrO_{4/2}$ ou $R'ZrO_{3/2}$ ou $R'_2\ ZrO_{2/2}$ /
$AlO_{3/2}$ ou $R'AlO_{2/2}$

R' étant un groupe méthyle ou éthyle, et/ou par des motifs phénylène de formule générale

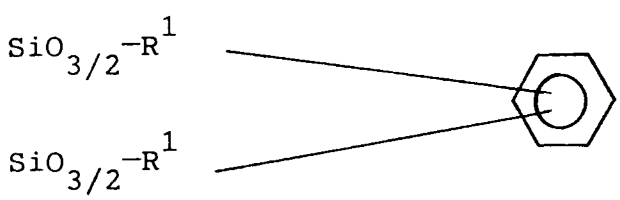 (2)

dans laquelle les chaînons pontants $R^1$ ont la même signification que dans la formule (3) et peuvent être identiques ou différents, et le rapport de la somme des atomes de Si, dans la formule (3) et la formule (2), aux atomes pontants silicium, titane, zirconium et aluminium peut aller de 1 : 0 à 1 : 15, avec un réactif minéral ou organique qui peut se dissocier en un cation et un anion, pour l'échange réciproque des cations, selon le principe d'échange statique ou dynamique d'ions, puis on lave le produit et on sépare éventuellement la matière solide de la phase liquide et éventuellement on la sèche et on la broie et/ou on la classe par taille et on l'étuve, dans un ordre quelconque.

**7.** Procédé selon la revendication 6, caractérisé en ce que l'on effectue l'échange d'ions dans une suspension agitée du composé de départ avec le réactif susceptible de dissociation au moins en partie dissous, ou on met en contact le produit de départ, sous forme de lit d'échange, avec la solution du réactif au moins en partie dissous.

**8.** Utilisation des organopolysiloxanes contenant des groupes phénylènesulfonates en tant qu'échangeurs de cations fortement acides.